# EUROPÄISCHE PATENTSCHRIFT

(11) **EP 3 243 963 B1**
(45) Veröffentlichungstag und Bekanntmachung des Hinweises auf die Patenterteilung: **04.07.2018**
(21) Anmeldenummer: 16168953.4
(22) Anmeldetag: 10.05.2016
(51) Int. Cl.: E02D 7/16

(54) **ANORDNUNG UND VERFAHREN ZUR VERBINDUNG EINES HYDRAULIKZYLINDERS**
ASSEMBLY AND METHOD FOR CONNECTING A HYDRAULIC CYLINDER
SYSTEME ET PROCEDE DE LIAISON D'UN VERIN HYDRAULIQUE

(43) Veröffentlichungstag der Anmeldung: 15.11.2017
(73) Patentinhaber: BAUER Deep Drilling GmbH, 86529 Schrobenhausen (DE)
(72) Erfinder: BAUR, Martin, 86676 Ehekirchen (DE)
(74) Vertreter: Wunderlich & Heim Patentanwälte Partnerschaftsgesellschaft mbB

(56) Entgegenhaltungen:
- EP-A1- 2 540 954
- DE-U1- 20 011 371

## Beschreibung

Die Erfindung betrifft eine Verbindungsanordnung für einen Hydraulikzylinder, welcher ein Zylindergehäuse und eine ausfahrbare Kolbenstange aufweist, an deren freiem Ende ein Anlenkauge zum Verbinden mit einem Bauteil angeordnet ist, gemäß dem Oberbegriff des Anspruchs 1.

Die Erfindung betrifft auch ein Verfahren zum Anordnen eines Hydraulikzylinders an einem Bauteil, gemäß Anspruch 12.

Die Erfindung betrifft weitergehend eine Hydraulikanlage mit mindestens einem Hydraulikzylinder der eingangs beschriebenen Art sowie eine Arbeitsmaschine mit einer derartigen Hydraulikanlage, gemäß den Ansprüchen 10 und 11.

Hydraulikzylinder werden zum Bewegen von Bauteilen und zur Kraftübertragung auf diese eingesetzt. Dabei kann das Zylindergehäuse des Hydraulikzylinders an einem ersten Bauteil angeordnet sein und die an einem Kolben des Hydraulikzylinders befestigte Kolbenstange mit einem zweiten Bauteil verbunden sein. Mit dieser Anordnung, die vom Grundgedanken beispielsweise aus der DE 10 2004 013 790 A bekannt ist, kann eine durch hydraulischen Druck im Zylinder erzeugte Bewegung des Kolbens eine relative Bewegung der beiden Bauteile zueinander bewirken, insbesondere eine relative Bewegung des zweiten Bauteils zu einem fest positionierten ersten Bauteil.

Um beispielsweise eine Translation und/oder eine Rotation des zweiten Bauteils relativ zum ersten Bauteil zu ermöglichen kann ein an der Kolbenstange angeordnetes Anlenkauge mit einem an dem zweiten, zu bewegenden Bauteil vorhandenen Gabelkopf verbolzt werden, das heißt mittels eines Bolzens verbunden werden. Das Anlenkauge, der Bolzen und der Gabelkopf bilden dabei ein Scharniergelenk. Auch das Zylindergehäuse kann mit dem ersten Bauteil derartig verbunden sein.

Eine derartige Anordnung eines Hydraulikzylinders zur Bewegung eines Bauteils relativ zu einem anderen Bauteil ist beispielsweise bei Tiefbohranlagen bekannt. Bei derartigen Bohranlagen muss ein Mast vor dem Durchführen einer Bohrung über einer Bohrstelle errichtet werden. Zum Aufrichten des Masts auf einer Trägerplattform kann ein hydraulischer Stellzylinder, ein sogenannter Mastaufstellzylinder, der eingangs beschriebenen Art zwischen der Trägerplattform und dem Mast angeordnet werden. Hierbei ist das Zylindergehäuse des Zylinder an der Trägerplattform schwenkbar angeordnet und das Anlenkauge an der Kolbenstange des Zylinders mit dem Mast verbunden, insbesondere verbolzt. Der Stellzylinder, der zum Aufrichten des Masts vorgesehen ist, kann dabei mitunter auch zum Wiedereinfahren des Masts verwendet werden. Hierbei wird der Mast jeweils relativ zur Trägerplattform bewegt.

Da der Mast zum Bohren fest auf der Trägerplattform angeordnet werden muss um in seiner Arbeitsstellung gesichert zu sein, ist eine verbleibende und dauerhafte Anordnung des hydraulischen Stellzylinders zwischen Mast und Trägerplattform während dem Bohren grundsätzlich nicht notwendig. Eine dauerhafte Anordnung hat zudem den Nachteil, dass ein freier Zugang zum Bohrmast durch den Stellzylinder entsprechend eingeschränkt ist. Ein weiterer Nachteil einer dauerhaften Zylinderanordnung an der Bohranlage ist, dass der während dem Bohren in einer Ausfahrstellung verbleibende Stellzylinder äußeren Einflüssen, zum Beispiel auftretenden Vibrationen, ausgesetzt ist. Vor dem Bohren ist es daher von Vorteil den Stellzylinder wieder zu entfernen.

Um den Stellzylinder vor dem Bohrvorgang nach Aufrichten des Masts wieder einzufahren, ist es notwendig, die Verbindung zwischen dem Anlenkauge an der Kolbenstange und dem Mast, insbesondere eine Bolzenverbindung, zu trennen und im Falle der Bolzenverbindung den Verbindungsbolzen zu entfernen. Hierfür muss ein Arbeiter in den Mast klettern oder hochgefahren werden um die Bolzenverbindung manuell zu trennen. Nach dem Bohrvorgang ist es dann allerdings notwendig, die Kolbenstange mit dem Mast erneut zu verbinden, insbesondere wieder manuell zu verbolzen, um den Mast einzuholen. Beim Wiederverbolzen kann es jedoch problematisch sein, wenn sich das Anlenkauge nicht in paralleler Ausrichtung zum Gabelkopf am Mast befindet. Dies tritt insbesondere bei einem teleskopisch ausfahrbaren Zylinder auf, wobei sich bei dem Teleskopiervorgang die einzelnen Teleskopstangen untereinander verdrehen können. Neben dem Verbolzen muss dann auch eine Korrektur dieser Ausrichtung manuell von dem Arbeiter unter zeitaufwändigen Maßnahmen, die vor allem auch seine Arbeitssicherheit gewährleisten, durchgeführt werden.

Der Erfindung liegt die **Aufgabe** zugrunde, eine Verbindungsanordnung für einen Hydraulikzylinder zu schaffen, die es ermöglicht eine verbesserte und flexiblere Verbindung zwischen zwei Bauteilen herzustellen.

Die Aufgabe wird nach der Erfindung zum einen mit einer Verbindungsanordnung für einen Hydraulikzylinder mit den Merkmalen des Anspruchs 1, einer Hydraulikanlage nach Anspruch 10, einer Arbeitsmaschine nach Anspruchs 11 und mit einem Verfahren zum Anordnen eines Hydraulikzylinders an einem Bauteil mit den Merkmalen des Anspruchs 12 gelöst.

Bevorzugte Ausführungen der Erfindung sind in den jeweiligen abhängigen Ansprüchen angegeben.

Die erfindungsgemäße Verbindungsanordnung für einen Hydraulikzylinder ist dadurch gekennzeichnet, dass das Anlenkauge mit der Kolbenstange über eine lösbare Steckverbindung verbunden ist.

Unter einer lösbaren Steckverbindung sind insbesondere formschlüssige oder kraftschlüssige Verbindungen zu verstehen, bei der Verbindungselemente ineinandergreifen. Grundsätzlich können dabei bereits zwei Verbindungselemente eine feste Verbindung herstellen. Es können jedoch vorzugsweise auch noch weitere Verbindungselemente vorgesehen sein, die helfen, den Formschluss zu verwirklichen.

Das Anlenkauge eines Hydraulikzylinders kann auch als Gelenkauge oder Gelenkkopf bezeichnet werden, wobei es aus einem ring- oder torusförmigen Bereich zum Aufnehmen eines Befestigungsbolzens und einem Übergangsbereich zum Verbinden des ringförmigen Aufnahmebereichs mit dem freien Ende der Kolbenstange des Hydraulikzylinders gebildet sein kann.

Ein Grundgedanke der Erfindung besteht darin, eine Verbindung von zwei Bauteilen mit einem Hydraulikzylinder, insbesondere ein doppeltwirkender Zylinder, nicht an einer der beiden Verbindungen mit den Bauteilen selbst zu trennen, sondern den Hydraulikzylinder im Bereich des freien Endes der Kolbenstange zweigeteilt und zusammensteckbar auszubilden. Dies hat den Vorteil, dass der Hydraulikzylinder an einem Bereich des Zylindergehäuses und an einem Bereich der Kolbenstange jeweils mit einem Bauteil dauerhaft verbunden bleiben kann, wobei vor der Betätigung des Hydraulikzylinders die erfindungsgemäße Verbindungsanordnung zusammengesteckt werden kann und nach Betätigung des Hydraulikzylinders, wenn dieser nicht mehr gebraucht wird, die Steckverbindung wieder getrennt werden kann.

Bei getrennter Steckverbindung kann die Kolbenstange in das Zylindergehäuse eingefahren werden und das Zylindergehäuse von seiner Arbeitsstellung in eine Ruhestellung weggeschenkt werden.

Ein weiterer Grundgedanke der Erfindung ist darin zu sehen, dass an einem mittels eines Hydraulikzylinders zu bewegenden Bauteil ein Anlenkauge bereits angeordnet ist und das freie Ende der Kolbenstange des Hydraulikzylinders nicht mit dem zu bewegenden Bauteil selbst verbunden werden muss, sondern in das daran bereits angebrachte Anlenkauge in einfacherer Weise eingesteckt werden kann. Dementsprechend ist es auch denkbar, dass mehrere zu bewegende Bauteile mit jeweils einem angebrachten Anlenkauge, mit einem einzigen Stellzylinder einzeln bewegt werden können.

Ein wesentlicher Aspekt der Erfindung ist somit, die Verbindung zwischen zwei Bauteilen mit einem Stellzylinder automatisch, das heißt ohne manuellen Eingriff, herzustellen und nach relativer Bewegung eines der beiden Bauteile zum anderen Bauteil mit dem Stellzylinder die Verbindung wieder automatisch und ohne manuellen Eingriff zu lösen.

Ein weiterer Aspekt der Erfindung ist die Trennbarkeit zwischen der Gruppe an Bauteilen aus Zylindergehäuse, Kolben und Kolbenstange einerseits und dem Anlenkauge als Teil des Zylinders andererseits. Es kann auch im Sinne der Erfindung verstanden werden, dass die Kolbenstange des Hydraulikzylinders trennbar ist, wobei das Anlenkauge am abtrennbaren freien Ende der Kolbenstange angeordnet ist. Die Kolbenstange kann daher auch als trennbare oder teilbare Kolbenstange bezeichnet werden.

Eine besonders bevorzugte Ausgestaltung der Erfindung besteht darin, dass zum Bilden der Steckverbindung an dem Anlenkauge eine hülsenförmige Aufnahme und an der Kolbenstange ein Bolzenelement angeordnet sind, welches passend in die hülsenförmige Aufnahme einsteckbar ist. In einem eingesteckten Zustand kann zwischen der hülsenförmigen Aufnahme und dem Bolzenelement eine formschlüssige Verbindung ausgebildet sein. Der Formschluss kann dabei bewirken, dass eine seitliche Bewegung des Bolzenelements senkrecht zu einer Mittelachse der Kolbenstange in der Aufnahme verhindert ist. Neben der in bevorzugter Weise verhinderten Bewegung senkrecht zur Kolbenstange ist die Bewegung des Bolzenelements in der hülsenförmigen Aufnahme in Ausfahrrichtung der Kolbenstange begrenzt. Dadurch kann die Steckverbindung durch Einführen des Bolzenelements in die hülsenförmige Aufnahme und Bilden eines Formschlusses in eingestecktem Zustand hergestellt werden. Eine Innenfläche der hülsenförmigen Aufnahme und eine Außenfläche des Bolzenelements können in dem eingesteckten Zustand teilweise oder vollständig ineinander eingreifen. Die hülsenförmige Aufnahme kann auch als weibliches Steckelement und das Bolzenelement auch als männliches Steckelement bezeichnet werden.

Grundsätzlich können die hülsenförmige Aufnahme und das Bolzenelement zueinander passende Geometrien, das heißt korrespondierende Geometrien, aufweisen. Eine bevorzugte Ausführungsform der Erfindung besteht darin, dass die hülsenförmige Aufnahme als ein trichterförmiger Konus und das Bolzenelement als ein kegelstumpfförmiger Konus ausgebildet ist. Die Konizität über einen Bereich der Außenfläche des kegelstumpfförmigen Konus kann hierbei mit der Konizität über einen Bereich der Innenfläche des trichterförmigen Konus übereinstimmen. In den Bereichen gleicher Konizität können die beiden Konen im eingesteckten Zustand in Eingriff stehen. Eine derartige zentrisch konische Verbindung des Bolzenelements und der hülsenförmiger Aufnahme führt die Mittelachsen beziehungsweise Rotationsachsen des trichterförmigen Konus und des kegelstumpfförmigen Konus in eingestecktem Zustand zusammen.

Der kegelstumpfförmige Konus kann durch seine Verjüngung in Ausfahrrichtung der Kolbenstange leicht in den sich entgegengesetzt zur Ausfahrrichtung erweiternden trichterförmigen Konus eingeführt werden. Während dem Einführen des kegelstumpfförmigen Konus in den trichterförmigen Konus ist ein Spiel vorhanden, das während dem Einführen reduziert wird bis der trichterförmige Konus in den kegelstumpfförmigen Konus eingreift und eine zumindest teilweise formschlüssige Verbindung ohne Spiel bildet. Der trichterförmige Konus und/oder der kegelstumpfförmige Konus können aus mehreren konstruktiven Einzelteilen, insbesondere aus paarweise korrespondierenden Bauteilen, bestehen. Dabei kann ein Paar eines Bauteils des trichterförmigen Konus und eines Bauteils des kegelstumpfförmigen Konus einen ersten Formschluss herstellen, der eine Bewegung senkrecht zur Kolbenstange verhindert. Ein weiteres derartiges Paar kann einen zweiten Formschluss herstellen, der eine Bewegung des Bolzenelements in Ausfahrrichtung der Kolbenstange relativ zum trichterförmigen Konus verhindert.

Zum Sichern der Steckverbindung gegen ein Herausrutschen entgegen der Ausfahrrichtung des Kolbens und/oder zur Verbesserung des Formschlusses ist es nach einer weiteren Ausführungsvariante der Erfindung vorteilhaft, dass zum Verriegeln der Steckverbindung eine Verriegelungsvorrichtung vorgesehen und an der hülsenförmigen Aufnahme angeordnet ist. Durch das Verriegeln der Steckverbindung kann sich das Bolzenelement in einem eingesteckten und verriegelten Zustand in keine Richtung in der hülsenförmigen Aufnahme frei bewegen. Dies kann auch als vollständiger Formschluss bezeichnet werden. Die Verriegelungsvorrichtung selbst kann dabei insbesondere einen Formschluss herstellen, der eine Bewegung des Bolzenelements relativ zur hülsenförmigen Aufnahme entgegengesetzt der Ausfahrrichtung der Kolbenstange verhindert. Deshalb kann die Verriegelungsvorrichtung auch als eine Sicherungsvorrichtung verstanden werden, die das Herausrutschen des Bolzenelements entgegen der Ausfahrrichtung der Kolbenstange verhindert. Des Weiteren kann die Verriegelungsvorrichtung alternativ oder zusätzlich durch entsprechenden Formschluss eine Bewegung des Bolzenelements zur hülsenförmigen Aufnahme seitlich zur oder in Ausfahrrichtung der Kolbenstange bewirken. Alternativ kann die Verriegelungsvorrichtung auch an dem Bolzenelement angeordnet sein, insbesondere ausfahrbar in ihm integriert sein, und in eingestecktem und verriegeltem Zustand in die hülsenförmige Aufnahme eingreifen.

Die Überwachung der Verbindung kann ferner durch mechanische, elektrische und/oder hydraulische Sensoren oder Signalgeber erfolgen. Diese Sensoren können an dem Bolzenelement und/oder an der hülsenförmigen Aufnahme vorhanden sein. Auch das Vorhandensein solcher Sensoren an der Verriegelungsvorrichtung ist denkbar. Die Sensoren liefern Signale, die den nicht verbundenen Zustand, den verbundenen Zustand und/oder den verriegelten und verbundenen Zustand anzeigen. Die Signale können an eine Steuer- und Auswerteeinheit übertragen werden.

Dabei ergibt sich nach einer Weiterbildung der Erfindung eine besonders sichere Verbindungsanordnung dadurch, dass an dem Bolzenelement und/oder der hülsenförmigen Aufnahme ein Aufnahmebereich ausgebildet ist und dass die Verriegelungsvorrichtung mindestens einen Riegel aufweist, welcher ausgebildet ist, in den Aufnahmebereich einzugreifen. Die Verriegelungsvorrichtung kann hierfür an der hülsenförmigen Aufnahme oder an dem Bolzenelement angeordnet sein. Der Aufnahmebereich und der mindestens eine Riegel können in eingestecktem und verriegeltem Zustand ineinander eingreifen, das heißt an zumindest einem Paar korrespondierender Flächen anliegen. Der mindestens eine Riegel kann das Bolzenelement und/oder die hülsenförmige Aufnahme durchdringen oder an einem oder beiden seitlich anliegen. Vorzugsweise sind zwei Riegel an der hülsenförmigen Aufnahme vorhanden, die an gegenüberliegenden Seiten des Bolzenelements in dieses eingreifen,

Eine weitere vorteilhafte Ausgestaltung der Erfindung ergibt sich dadurch, dass an dem Bolzenelement als Aufnahmebereich eine umlaufende Ringnut vorgesehen ist, welche zwischen einem ersten und einem zweiten Bereich des Bolzenelements ausgebildet ist, und dass die Verriegelungsvorrichtung eine zweigeteilte Gabel oder zwei nebeneinander angeordnete Riegel aufweist, welche ausgebildet sind, in die umlaufende Ringnut zum Bilden einer formschlüssigen Verbindung einzugreifen. Alternativ zu der Gabel können auch zwei parallel angeordnete Einzelriegel vorgesehen sein, die an gegenüberliegenden Seiten der Ringnut eingreifen. Die Gabel kann an der hülsenförmigen Aufnahme beweglich angeordnet sein, so dass sie im verriegelten Zustand in die umlaufende Ringnut eingreifen kann. Neben dem seitlichen Eingriff am Bolzenelement in der Ringnut kann die Gabel oder die Riegel auch zum Verriegeln der Verbindungsanordnung in die hülsenförmige Aufnahme seitlich eingreifen oder in diese eindringen. Hierfür kann auch in der hülsenförmigen Aufnahme eine der umlaufenden Ringnut des Bolzenelements gegenüberliegende Ringnut vorgesehen sein und zum Durchdringen der hülsenförmigen Aufnahme entsprechende Aufnahmen, insbesondere Löcher, vorgesehen sein. Die Ringnut und/oder die Gabelarme der Gabel beziehungsweise die Riegel können ein rechtwinkliges oder rundes Profil aufweisen.

Nach einer weiteren Ausführungsform der Erfindung ist es zweckmäßig, dass an der hülsenförmigen Aufnahme ein Stellzylinder angeordnet ist, welcher ausgebildet ist, die Verriegelungsvorrichtung zu betätigen. Der Stellzylinder kann ein hydraulischer oder pneumatischer Zylinder sein, der an der hülsenförmigen Aufnahme angeordnet ist. Zum Verriegeln der Verbindungsanordnung kann eine Kolbenstange des Stellzylinders eingefahren werden, wobei sich diese im verbundenen aber entriegelten Zustand in einer ausgefahrenen Stellung befinden kann. Durch eine Anordnung der Verriegelungsvorrichtung an der Kolbenstange des Stellzylinders kann diese durch das Einfahren der Kolbenstange mit dem Aufnahmebereich in Eingriff gebracht werden und durch das Ausfahren der Kolbenstange aus dem Aufnahmebereich wieder herausgezogen werden. Mittels des Stellzylinders kann das Verriegeln und Entriegeln der Verbindungsanordnung ferngesteuert oder automatisch erfolgen.

Der Stellzylinder kann auch als zum Bolzenelement quer gerichteter Schließzylinder verstanden werden. Dieser Schließzylinder kann einen Verriegelungsbolzen als Teil des Riegels in die hülsenförmige Aufnahme einschieben.

Eine weitere besonders bevorzugte Ausführungsform besteht nach der Erfindung darin, dass die Verriegelungsvorrichtung eine Signaleinrichtung aufweist, mit der in einem nicht verriegelten und/oder in einem verriegelten Zustand ein optisches Signal erzeugbar ist. Das optische Signal kann durch das Sichtbar- oder Unsichtbarsein eines Bereichs der Verriegelungsvorrichtung erzeugt werden oder durch die Signaleinrichtung aktiv ausgesendet werden. Dabei kann das optische Signal insbesondere von einem sichtbaren, mit Warnfarbe, insbesondere mit rot oder grün, markierten Bereich erzeugt werden. Alternativ kann auch Licht in einer Wellenlänge einer Warnfarbe, insbesondere in einer Wellenlänge, die rotes oder grünes Licht erzeugt, ausgesandt werden. Hierfür kann eine Warnleuchte vorgesehen sein.

Nach einer weiteren Ausführungsform der Erfindung ist es zweckmäßig, dass der Hydraulikzylinder an einem Bauteil schwenkbar angeordnet ist und dass der Hydraulikzylinder ein doppeltwirkender und teleskopierbarer Zylinder ist. Durch die schwenkbare Anordnung des Hydraulikzylinders an dem Bauteil kann dieser in eine Arbeitsstellung zum Ausfahren der Kolbenstange und zum Bilden der Steckverbindung zwischen Anlenkauge und Kolbenstange geschwenkt werden. Das Ausfahren der Kolbenstange kann so lange erfolgen, bis das Bolzenelement am Ende der Kolbenstange passend in die hülsenförmige Aufnahme eingesteckt ist. Die Ausfahrrichtung zum passenden Einstecken kann dabei durch ein weiteres Schwenken des Hydraulikzylinders geändert werden und dabei passgenau zum Einstecken eingestellt werden. Zum Ausfahren der Kolbenstange über eine Distanz, die größer ist als ein einfacher Kolbenhub des Zylinders, kann der Hydraulikzylinder ein teleskopierbarer Zylinder sein. Der Kolbenhub ist dabei der maximale Weg, den der Kolben innerhalb des Zylinders in eine Richtung zurücklegen kann. Die Kolbenstange kann dann durch den doppeltwirkenden Hydraulikzylinder auch wieder eingefahren werden.

Hinsichtlich des Verfahrens wird die eingangs genannte Aufgabe gemäß der Erfindung dadurch gelöst, dass ein Hydraulikzylinder mit einem Zylindergehäuse und einer Kolbenstange an einem ersten Bauteil angebracht wird, ein Anlenkauge an einem zweiten Bauteil angebracht wird und die Kolbenstange aus dem Zylindergehäuse des Hydraulikzylinders ausgefahren wird, wobei ein freies Ende der Kolbenstange zu dem Anlenkauge verfahren und mittels Steckverbindung mit dem Anlenkauge lösbar verbunden wird.

Vor dem Bewegen des zweiten Bauteils mit dem Hydraulikzylinder wird die Kolbenstange des Hydraulikzylinders somit ohne das zweite Bauteil zu bewegen selbst ausgefahren, um die Steckverbindung mit dem Anlenkauge zunächst herzustellen. Dann kann das zweite Bauteil in eingestecktem Zustand durch ein weiteres Ausfahren oder Einfahren des Hydraulikzylinders bewegt werden.

Eine vorteilhafte Ausführung des Verfahrens besteht nach der Erfindung darin, dass die Steckverbindung mittels eines Verriegelungsmechanismus verriegelt wird, wobei ein mit dem Anlenkauge verbundener Riegel in einen Aufnahmebereich des freien Endes der Kolbenstange eingreift. Der Verriegelungsmechanismus dient einer besonders sicheren Bewegung des zweiten Bauteils relativ zum ersten Bauteil. Dabei dient der Verriegelungsmechanismus insbesondere dem Verhindern eines sich Lösens der Steckverbindung.

Hinsichtlich der Sicherheit der Verriegelung ist es besonders vorteilhaft, dass eine visuelle Überprüfung der Verriegelung mittels einer optischen Signalisierung erfolgt, die eine Verriegelung und/oder eine Nichtverriegelung anzeigt und dass das zweite Bauteil bei verriegelter Verbindung durch ein Ausfahren und/oder Einfahren des Hydraulikzylinders bezüglich des ersten Bauteils relativ bewegt wird. Die verriegelte Verbindung kann dabei einen verriegelten Zustand darstellen, indem das zweite Bauteil relativ zum ersten Bauteil bewegt werden kann. In diesem verriegelten Zustand greift der Riegel in den Aufnahmebereich ein, wobei der Riegel zumindest teilweise nicht mehr sichtbar ist. Ein nicht eingreifender Teil des Riegels kann dabei auch von einem Stellzylinder, der den Verriegelungsmechanismus auslösen kann, oder von einer an diesem Stellzylinder befestigten Abdeckung verdeckt sein. Der Riegel kann dabei teilweise oder vollständig in Signalfarbe sein, die den freien Riegel in nicht verriegeltem Zustand deutlich erkennbar macht und den Riegel in verriegeltem und verdecktem Zustand nicht sichtbar werden lässt. Es ist grundsätzlich auch denkbar, den verriegelten Zustand anzuzeigen, zum Beispiel durch ein Hindurchgreifen des Riegels durch das Bolzenelement und/oder eine hülsenförmige Aufnahme an dem Anlenkauge und einem durch das Hindurchgreifen gegenüberliegend zum Stellzylinder sichtbar werdenden Endes des Riegels.

Nach einer weiteren Ausführungsform der Erfindung ist es zweckmäßig, dass nach der relativen Bewegung des zweiten Bauteils in eine Arbeitsstellung, die Verbindungsanordnung wieder gelöst wird und das Anlenkauge an dem zweiten Bauteil verbleibt. Nach Lösen der Verbindung kann die Kolbenstange wieder eingefahren werden und der Hydraulikzylinder in eine Ruhestellung geschwenkt werden. In dieser Ruhestellung werden Arbeiten an oder von dem zweiten Bauteil durch den verschwenkten Hydraulikzylinder nicht gestört.

Die Erfindung wird nachfolgend anhand von einem bevorzugten Ausführungsbeispiel weiter erläutert, welches schematisch in den beigefügten Zeichnungen dargestellt ist. In den Zeichnungen zeigen:
- Fig. 1:: eine Seitenansicht einer erfindungsgemäßen Verbindungsanordnung für einen Hydraulikzylinder an einer Tiefbohranlage mit eingeklapptem Mast;
- Fig. 2:: eine Seitenansicht der Tiefbohranlage von Fig. 1 mit aufgerichtetem Mast;
- Fig. 3a:: eine Seitenansicht der erfindungsgemäßen Verbindungsanordnung für einen Hydraulikzylinder in nicht eingestecktem Zustand;
- Fig. 3b:: eine Seitenansicht der erfindungsgemäßen Verbindungsanordnung für einen Hydraulikzylinder in nicht eingestecktem Zustand einem mit teilweise eingefahrenem Bolzenelement in einer hülsenförmigen Aufnahme;
- Fig. 4:: die erfindungsgemäße Verbindungsanordnung für einen Hydraulikzylinder in eingestecktem Zustand;
- Fig. 5:: eine Seitenansicht der erfindungsgemäßen Verbindungsanordnung für einen Hydraulikzylinder in eingestecktem und verriegeltem Zustand.

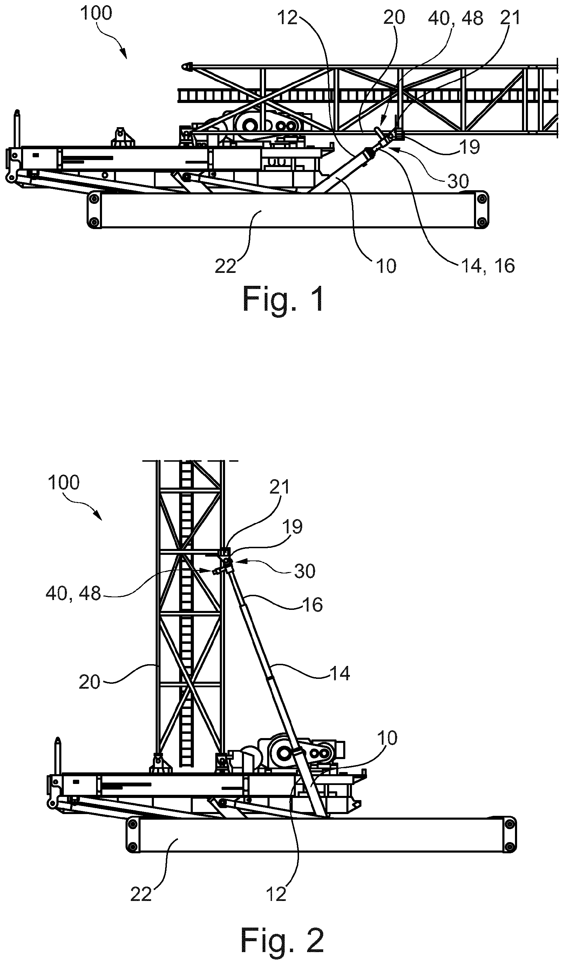

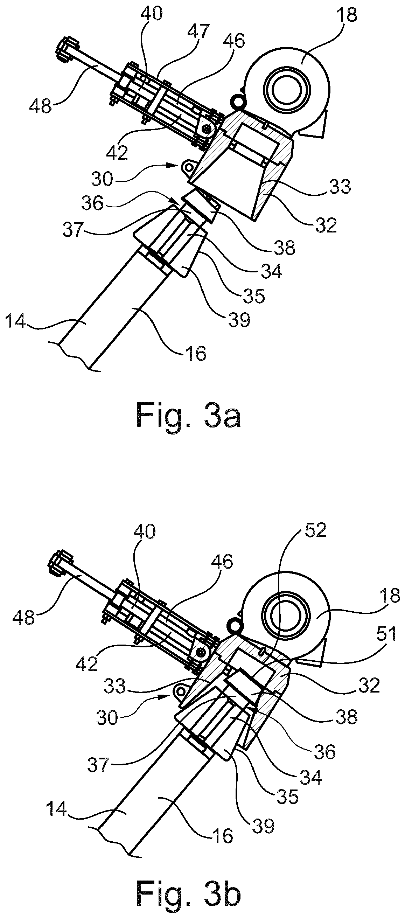

Eine beispielhafte Ausführungsform der erfindungsgemäßen Verbindungsanordnung für einen Hydraulikzylinder 10 wird nachfolgend im Zusammenhang mit den Figuren 1 bis 5 erläutert. Dabei zeigen Figuren 1 und 2 den Hydraulikzylinder 10 an einer Tiefbohranlage 100 und Figuren 3a bis 5 die Verbindungsanordnung 30.

Bei den Figuren 1 und 2 ist der Hydraulikzylinder 10 zwischen einer Trägerplattform 22 der Tiefbohranlage 100 und einem Mast 20 der Tiefbohranlage 100 angeordnet. Dabei ist das Zylindergehäuse 12 des Hydraulikzylinders 10 an einem Ende an der Trägerplattform 22 schwenkbar angeordnet. Eine Kolbenstange 14 ist an ihrem freien Ende 16 über ein Anlenkauge 18 an dem Mast 20 angelenkt. Dabei ist auch die Kolbenstange 14 und der Hydraulikzylinder 10 über das Anlenkauge 18 schwenkbar am Mast angeordnet. Beide schwenkbaren Anlenkungen des Hydraulikzylinders 10 am Mast 20 und der Trägerplattform 22 bilden jeweils ein Scharniergelenk, wobei das Scharniergelenk an der Trägerplattform 22 in den Figuren 1 und 2 nicht gezeigt ist und das Scharniergelenk am Mast 20 ferner durch einen Gabelkopf 21 und einen Bolzen 19 ausgebildet ist. Das Scharniergelenk an der Trägerplattform 22 kann auch derartig ausgebildet sein.

Der Unterschied zwischen Fig. 1 und Fig. 2 besteht darin, dass die teleskopierbare Kolbenstange 14 des Hydraulikzylinders 10 in Fig. 1 eingefahren ist und der Mast 20 in einer horizontalen Transportstellung auf der Trägerplattform 22 angeordnet ist, während die Kolbenstange 14 in Fig. 2 ausgefahren ist und der Mast 20 sich in aufgerichteter vertikaler Stellung auf der Trägerplattform 22 in Arbeitsstellung befindet.

In diesem Ausführungsbeispiel ist der Hydraulikzylinder 10 doppeltwirkend und die Kolbenstange 14 teleskopierbar und weist mehrere einzelne Teleskopabschnitte auf, wobei sich das freie Ende 16 am Ende des innen liegenden Stangenabschnitts befindet. Das freie Ende 16 der Kolbenstange 14 ist über eine lösbare Steckverbindung 30 mit dem Anlenkauge 18, das mit dem Bolzen 19 mit dem Gabelkopf 21 verbolzt ist, verbunden. Im Bereich der Steckverbindung 30 ist eine Verriegelungsvorrichtung 40 mit einem Verriegelungsmechanismus und einer Signaleinrichtung 48, die eine Signalisierung auslöst, angeordnet.

Fig. 3a zeigt eine beispielhafte Ausführungsform der erfindungsgemäßen Verbindungsanordnung für einen Hydraulikzylinder 10. Dabei befindet sich die Steckverbindung 30 in einem nicht eingesteckten Zustand. Die Darstellung dient einerseits der detaillierten Darstellung der Steckverbindung und andererseits zeigt sie den Zustand beim Ausfahren der Kolbenstange 14 vor dem Verbinden der Kolbenstange 14 mit dem Anlenkauge 18. Die Kolbenstange 14 weist an ihrem freien Ende 16 ein Bolzenelement 34 auf, das fest an dem freien Ende 16 der Kolbenstange 14 angebracht ist. Das Bolzenelement 34 hat einen ersten vorderen Bereich 38 und einen zweiten Bereich 39, der zwischen dem ersten Bereich 38 und dem freien Ende 16 der Kolbenstange 14 angeordnet ist. Beide Bereiche 38, 39 sind kegelstumpfförmig ausgebildet, wobei sie durch einen Aufnahmebereich 36, der von einer Ringnut 37 gebildet ist, getrennt sind. Die beiden Bereiche 38 und 39 bilden zusammen die Form eines Kegelstumpfs, der von der Ringnut 37 unterbrochen ist. Die Bereiche 38, 39 des Bolzenelements 34 können separate, insbesondere miteinander verschweißte Bauteile sein, oder Bereiche von einem einstückig ausgebildeten Bolzenelements 34 sein. Ebenso kann das Bolzenelement 34 auf der Kolbenstange 14 als separates Bauteil angeordnet sein oder das Bolzenelement 34 kann ein Bereich eines einstückig ausgebildeten freien Endes 16 der Kolbenstange 14 sein.

Fig. 3a zeigt das Anlenkauge 18 als ringförmig ausgebildeten Torus mit einer an dem Anlenkauge 18 angebrachten hülsenförmigen Aufnahme 32.

An der hülsenförmigen Aufnahme 32 sind seitlich zwei Riegel 42 angeordnet, die mit der nicht gezeigten Kolbenstange des Stellzylinders 46 verbunden sind. Ein äußeres Ende der Riegel 42 ist als Signaleinrichtung 48 ausgebildet. Bei ausgefahrenen Riegeln 42 ist die Signaleinrichtung 48 sichtbar. Um den Stellzylinder 46 und die Riegel 42 ist ein Gehäuse 47 zum Schutz angebracht. Das Gehäuse 47 dient neben der Schutzfunktion bei eingefahrenen Riegeln der Abdeckung der Signaleinrichtung 48, die dann nicht mehr sichtbar ist. In nicht verriegeltem Zustand, das heißt bei ausgefahrenen Riegeln 42, ist die Signaleinrichtung 48 somit sichtbar und gibt ein optisches Warnzeichen für einen nicht verriegelten Zustand. Alternativ zu den beiden Riegeln 42 kann auch nur ein Riegel, insbesondere auch mit einem gabelförmigen Ende einer Gabel, vorgesehen sein.

Fig. 3b zeigt im Unterschied zur Fig. 3a die Steckverbindung 30 in einem Zustand kurz vor einem eingesteckten Zustand. Dabei liegt der kegelförmige Konus 35 des Bolzenelements 34 teilweise an dem trichterförmigen Konus 33 der hülsenförmigen Aufnahme 32 an. Die Konen liegen dabei an zwei Stellen aneinander an, in erster Stelle am ersten Bereich 38 des Bolzenelements 34 und an zweiter Stelle am zweiten Bereich 39 des Bolzenelements 34. In diesem Zustand ist das Bolzenelement 34 teilweise in die hülsenförmige Aufnahme 32 eingefahren und die Mittelachsen der Konen 33, 35 sind nicht parallel.

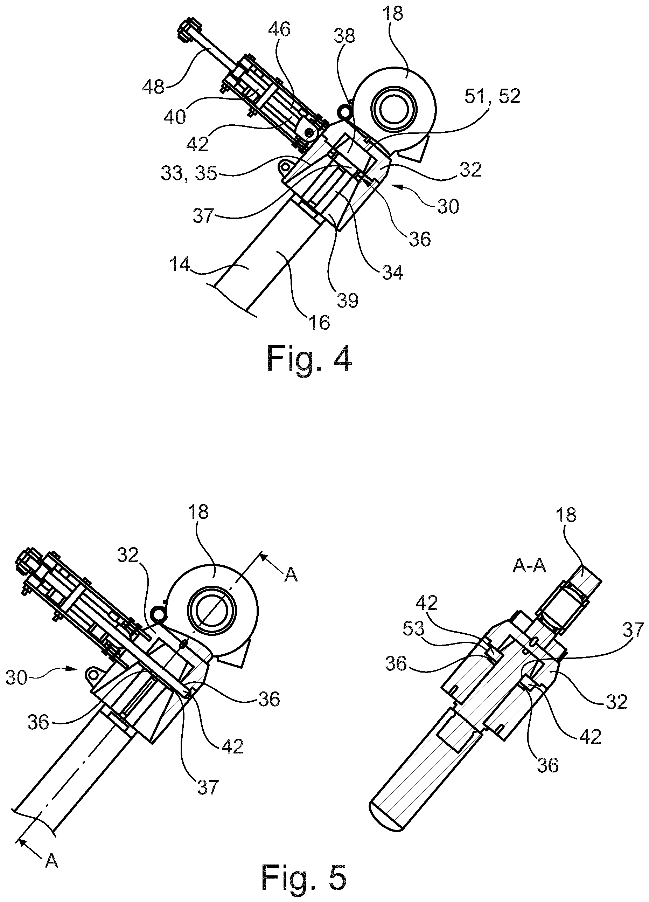

In Fig. 4 ist die Steckverbindung 30 zwischen dem Anlenkauge 18 und der Kolbenstange 14 in eingestecktem Zustand dargestellt. Dabei liegen die Konen 33, 35 aneinander an und deren Mittelachsen sind parallel zueinander angeordnet. Der zweite Bereich 39 des Bolzenelements 34 steht mit der hülsenförmigen Aufnahme 32 in Eingriff, wobei die Konen 33, 35 über den zweiten Bereich 39 miteinander korrespondieren. Der erste Bereich 38 des Bolzenelements 34 grenzt mit der Stirnfläche 51 des Bolzenelements 34 an der innen liegenden Endfläche 52 der hülsenförmigen Aufnahme 32 an. Zwischen dem ersten Bereich 38 des Bolzenelements 34 und der hülsenförmigen Aufnahme 32 ist in eingestecktem Zustand ein Spiel vorhanden. In diesem Bereich ist die hülsenförmige Aufnahme 32 nicht trichterförmig konisch sondern zylindrisch.

Fig. 5 zeigt die Verbindungsanordnung 30 in eingestecktem und verriegeltem Zustand. Dabei greifen zwei Riegel 42 in den Aufnahmebereich 36 ein. Der Aufnahmebereich 36 ist durch eine Ringnut 37 und eine dieser Ringnut 37 gegenüberliegenden Ringnut 53 in der hülsenförmigen Aufnahme 32 gebildet. Die Riegel 42 greifen auch in die hülsenförmige Aufnahme 32 gegenüber liegend zu dem Stellzylinder 46 in Aufnahmelöchern ein. Die Signaleinrichtung 48 ist in verriegeltem Zustand nicht mehr sichtbar, da die Riegel 42 in das Gehäuse 47 des Stellzylinders 46 eingefahren sind.

Mit diesen in den Figuren gezeigten beispielhaften Ausführungsformen sind alle Vorteile der Erfindung verwirklicht. Insbesondere ist eine automatisch einsteckbare und sicherbare Verbindungsanordnung für einen Hydraulikzylinder gezeigt.

## Patentansprüche

1. Verbindungsanordnung für einen Hydraulikzylinder (10), welcher ein Zylindergehäuse (12) und eine ausfahrbare Kolbenstange (14) aufweist, an deren freiem Ende (16) ein Anlenkauge (18) zum Verbinden mit einem Bauteil angeordnet ist,
**dadurch gekennzeichnet,**
**dass** das Anlenkauge (18) mit der Kolbenstange (14) über eine lösbare Steckverbindung (30) verbunden ist.

2. Verbindungsanordnung nach Anspruch 1,
**dadurch gekennzeichnet,**
**dass** zum Bilden der Steckverbindung (30) an dem Anlenkauge (18) eine hülsenförmige Aufnahme (32) und an der Kolbenstange (14) ein Bolzenelement (34) angeordnet sind, welches passend in die hülsenförmige Aufnahme (32) einsteckbar ist.

3. Verbindungsanordnung nach Anspruch 2,
**dadurch gekennzeichnet,**
**dass** die hülsenförmige Aufnahme (32) als ein trichterförmiger Konus (33) und das Bolzenelement (34) als ein kegelstumpfförmiger Konus (35) ausgebildet ist.

4. Verbindungsanordnung nach einem der Ansprüche 2 oder 3,
**dadurch gekennzeichnet,**
**dass** zum Verriegeln der Steckverbindung (30) eine Verriegelungsvorrichtung (40) vorgesehen und an der hülsenförmigen Aufnahme (32) angeordnet ist.

5. Verbindungsanordnung nach Anspruch 4,
**dadurch gekennzeichnet,**
**dass** an dem Bolzenelement (34) und/oder der hülsenförmigen Aufnahme (32) ein Aufnahmebereich (36) ausgebildet ist und
**dass** die Verriegelungsvorrichtung (40) mindestens einen Riegel (42) aufweist, welcher ausgebildet ist, in den Aufnahmebereich (36) einzugreifen.

6. Verbindungsanordnung nach Anspruch 5,
**dadurch gekennzeichnet,**
**dass** an dem Bolzenelement (34) als Aufnahmebereich (36) eine umlaufende Ringnut (37) vorgesehen ist, welche zwischen einem ersten und einem zweiten Bereich (38, 39) des Bolzenelements (34) ausgebildet ist, und
**dass** die Verriegelungsvorrichtung (40) eine zweigeteilte Gabel (44) oder zwei nebeneinander angeordnete Riegel (42) aufweist, welche ausgebildet sind, in die umlaufende Ringnut (37) zum Bilden einer formschlüssigen Verbindung einzugreifen.

7. Verbindungsanordnung nach einem der Ansprüche 4 bis 6,
**dadurch gekennzeichnet,**
**dass** an der hülsenförmigen Aufnahme (32) ein Stellzylinder (46) angeordnet ist, welcher ausgebildet ist, die Verriegelungsvorrichtung (40) zu betätigen.

8. Verbindungsanordnung nach einem der Ansprüche 4 bis 7,
**dadurch gekennzeichnet,**
**dass** die Verriegelungsvorrichtung (40) eine Signaleinrichtung (48) aufweist, mit der in einem nicht verriegelten und/oder in einem verriegelten Zustand ein optisches Signal erzeugbar ist.

9. Verbindungsanordnung nach einem der vorherigen Ansprüche,
**dadurch gekennzeichnet,**
**dass** der Hydraulikzylinder (10) an einem Bauteil (22) schwenkbar angeordnet ist und
**dass** der Hydraulikzylinder (10) ein doppeltwirkender und teleskopierbarer Zylinder (10) ist.

10. Hydraulikanlage mit mindestens einem Hydraulikzylinder (10), welcher eine Verbindungsanordnung nach einem der Ansprüche 1 bis 9 aufweist.

11. Arbeitsmaschine, insbesondere eine Bohranlage oder eine Baumaschine, mit einer Hydraulikanlage nach Anspruch 10.

12. Verfahren zum Anordnen eines Hydraulikzylinders (10) an einem Bauteil, insbesondere mit einer Verbindungsanordnung nach einem der Ansprüche 1 bis 9, bei dem
- ein Hydraulikzylinder (10) mit einem Zylindergehäuse (12) und einer Kolbenstange (14) an einem ersten Bauteil (22) angebracht wird,
- ein Anlenkauge (18) an einem zweiten Bauteil (20) angebracht wird und
- die Kolbenstange (14) aus dem Zylindergehäuse (12) des Hydraulikzylinders (10) ausgefahren wird, wobei ein freies Ende (16) der Kolbenstange (14) zu dem Anlenkauge (18) verfahren und mittels Steckverbindung (30) mit dem Anlenkauge (18) lösbar verbunden wird.

13. Verfahren nach Anspruch 12,
**dadurch gekennzeichnet,**
**dass** die Steckverbindung (30) mittels eines Verriegelungsmechanismus (40) verriegelt wird,
wobei ein mit dem Anlenkauge (18) verbundener Riegel (42) in einen Aufnahmebereich (36) des freien Endes (16) der Kolbenstange (14) eingreift.

14. Verfahren nach Anspruch 13,
**dadurch gekennzeichnet,**
**dass** eine visuelle Überprüfung der Verriegelung mittels einer optischen Signalisierung (48) erfolgt, die eine Verriegelung und/oder eine Nichtverriegelung anzeigt und
**dass** das zweite Bauteil (20) bei verriegelter Verbindung durch ein Ausfahren und/oder Einfahren des Hydraulikzylinders (10) bezüglich des ersten Bauteils (22) relativ bewegt wird.

15. Verfahren nach Anspruch 14,
**dadurch gekennzeichnet,**
**dass** nach der relativen Bewegung des zweiten Bauteils (20) in eine Arbeitsstellung, die Verbindungsanordnung wieder gelöst wird und das Anlenkauge (18) an dem zweiten Bauteil (20) verbleibt.

## Claims

1. Connecting arrangement for a hydraulic cylinder (10) having a cylinder housing (12) and an extendable piston rod (14), at the free end (16) of which a linkage lug (18) for connection to a construction component is arranged,
**characterized in that**
the linkage lug (18) is connected to the piston rod (14) via a releasable plug connection (30).

2. Connecting arrangement according to claim 1,
**characterized in that**
to form the plug connection (30), on the linkage lug (18) a sleeve-shaped receiving part (32) is arranged and on the piston rod (14) a bolt element (34) is arranged, which can be plugged in a fitting manner into the sleeve-shaped receiving part (32).

3. Connecting arrangement according to claim 2,
**characterized in that**
the sleeve-shaped receiving part (32) is designed as a funnel-shaped cone (33) and the bolt element (34) as a truncated cone (35).

4. Connecting arrangement according to any one of claims 2 or 3,
**characterized in that**
to lock the plug connection (30) a locking device (40) is provided and arranged on the sleeve-shaped receiving part (32).

5. Connecting arrangement according to claim 4,
**characterized in that**
on the bolt element (34) and/or the sleeve-shaped receiving part (32) a receiving region (36) is designed and
**in that** the locking device (40) has at least one locking bar (42) which is designed to engage with the receiving region (36).

6. Connecting arrangement according to claim 5,
**characterized in that**
on the bolt element (34) a circumferential annular groove (37) is provided as receiving region (36) which is designed between a first and a second region (38, 39) of the bolt element (34), and
**in that** the locking device (40) has a two-pronged fork (44) or two locking bars (42) arranged next to each other which are designed to engage with the circumferential annular groove (37) to establish a form-fitting connection.

7. Connecting arrangement according to any one of claims 4 to 6,
**characterized in that**
on the sleeve-shaped receiving part (32) a positioning cylinder (46) is arranged which is designed to actuate the locking device (40).

8. Connecting arrangement according to any one of claims 4 to 7,
**characterized in that**
the locking device (40) has a signaling means (48), with which an optical signal can be generated in a non-locked and/or in a locked state.

9. Connecting arrangement according to any one of the preceding claims,
**characterized in that**
the hydraulic cylinder (10) is arranged in a pivotable manner on a construction component (22)
and
**in that** the hydraulic cylinder (10) is a double-acting and telescopic cylinder (10).

10. Hydraulic system with at least one hydraulic cylinder (10) having a connecting arrangement according to any one of claims 1 to 9.

11. Working machine, in particular a drilling rig or a construction machine, with a hydraulic system according to claim 10.

12. Method for arranging a hydraulic cylinder (10) on a construction component, in particular with a connecting arrangement according to any one of claims 1 to 9, in which
- a hydraulic cylinder (10) with a cylinder housing (12) and a piston rod (14) is attached to a first construction component (22),
- a linkage lug (18) is attached to a second construction component (20) and
- the piston rod (14) is extended from the cylinder housing (12) of the hydraulic cylinder (10), wherein a free end (16) of the piston rod (14) is moved to the linkage lug (18) and releasably connected to the linkage lug (18) by means of a plug connection (30).

13. Method according to claim 12,
**characterized in that**
the plug connection (30) is locked by means of a locking mechanism (40), wherein a locking bar (42) connected to the linkage lug (18) engages with a receiving region (36) of the free end (16) of the piston rod (14).

14. Method according to claim 13,
**characterized in that**
a visual inspection of the locking is effected by means of an optical signaling (48) which indicates a locking and/or a non-locking and
**in that** when the connection is locked the second construction component (20) is moved relative to the first construction component (22) through extension and/or retraction of the hydraulic cylinder (10).

15. Method according to claim 14,
**characterized in that**
after relative movement of the second construction component (20) into a working position the connecting arrangement is released again and the linkage lug (18) remains on the second construction component (20).

## Revendications

1. Ensemble de liaison pour un vérin hydraulique (10), qui présente un carter de vérin (12) et une tige de piston (14) pouvant être sortie, au niveau de l'extrémité libre (16) de laquelle est disposée une bague pivotante (18) destinée à être reliée à un composant,
**caractérisé en ce**
**que** la bague pivotante (18) est reliée à la tige de piston (14) par l'intermédiaire d'une liaison enfichable (30) amovible.

2. Ensemble de liaison selon la revendication 1,
**caractérisé en ce**
**qu'**afin de former la liaison enfichable (30), un logement (32) présentant une forme de douille est disposé au niveau de la bague pivotante (18) et un élément de boulon (34) est disposé au niveau de la tige de piston (14), lequel est adapté pour être emboîté dans le logement (32) présentant une forme de douille.

3. Ensemble de liaison selon la revendication 2,
**caractérisé en ce**
**que** le logement (32) présentant une forme de douille est réalisé sous la forme d'un cône (33) présentant une forme d'entonnoir, et l'élément de boulon (34) est réalisé sous la forme d'un cône (35) présentant une forme de cône tronqué.

4. Ensemble de liaison selon l'une quelconque des revendications 2 ou 3,
**caractérisé en ce**
**qu'**afin de verrouiller la liaison enfichable (30), un dispositif de verrouillage (40) est prévu et est disposé au niveau du logement (32) présentant une forme de douille.

5. Ensemble de liaison selon la revendication 4,
**caractérisé en ce**
**qu'**une zone de réception (36) est réalisée au niveau de l'élément de boulon (34) et/ou au niveau du logement (32) présentant une forme de douille, et
**que** le dispositif de verrouillage (40) présente au moins un verrou (42), qui est réalisé pour venir en prise avec la zone de réception (36).

6. Ensemble de liaison selon la revendication 5,
**caractérisé en ce**
**qu'**est prévue, au niveau de l'élément de boulon (34) en tant que zone de réception (36), une rainure annulaire (37) périphérique, qui est réalisée entre une première et une deuxième zone (38, 39) de l'élément de boulon (34), et
**que** le dispositif de verrouillage (40) présente une fourche (44) en deux parties ou deux verrous (42) disposés de manière juxtaposée, qui sont réalisés pour venir en prise avec la rainure annulaire (37) périphérique afin de former une liaison à complémentarité de forme.

7. Ensemble de liaison selon l'une quelconque des revendications 4 à 6,
**caractérisé en ce**
**qu'**un vérin de réglage (46) est disposé au niveau du logement (32) présentant une forme de douille, lequel est réalisé afin d'actionner le dispositif de verrouillage (40).

8. Ensemble de liaison selon l'une quelconque des revendications 4 à 7,
**caractérisé en ce**
**que** le dispositif de verrouillage (40) présente un dispositif de signalisation (48), à l'aide duquel un signal optique peut être généré dans un état non verrouillé et/ou dans un état verrouillé.

9. Ensemble de liaison selon l'une quelconque des revendications précédentes,
**caractérisé en ce**
**que** le vérin hydraulique (10) est disposé de manière à pouvoir pivoter au niveau d'un composant (22), et
**que** le vérin hydraulique (10) est un vérin (10) à double action et télescopique.

10. Installation hydraulique comprenant au moins un vérin hydraulique (10), qui présente un ensemble de liaison selon l'une quelconque des revendications 1 à 9.

11. Engin de travail, en particulier installation de forage ou engin de construction, comprenant une installation hydraulique selon la revendication 10.

12. Procédé servant à disposer un vérin hydraulique (10) au niveau d'un composant, en particulier à l'aide d'un ensemble de liaison selon l'une quelconque des revendications 1 à 9, dans lequel
- un vérin hydraulique (10) comprenant un carter de vérin (12) et une tige de piston (14) est installé au niveau d'un premier composant (22),
- une bague pivotante (18) est installée au niveau d'un deuxième composant (20), et
- la tige de piston (14) est sortie du carter de vérin (12) du vérin hydraulique (10), une extrémité (16) libre de la tige de piston (14) étant déplacée en direction de la bague pivotante (18) et étant reliée de manière amovible à la bague pivotante (18) au moyen d'une liaison enfichable (30).

13. Procédé selon la revendication 12,
**caractérisé en ce**
**que** la liaison enfichable (30) est verrouillée au moyen d'un mécanisme de verrouillage (40),
un verrou (42) relié à la bague pivotante (18) venant en prise avec une zone de réception (36) de l'extrémité (16) libre de la tige de piston (14).

14. Procédé selon la revendication 13,
**caractérisé en ce**
**qu'**un contrôle visuel du verrouillage est effectué au moyen d'une signalisation (48) optique, qui indique un verrouillage et/ou un non-verrouillage, et
**que** le deuxième composant (20) est déplacé de manière relative par rapport au premier composant (22) en sortant et/ou en rentrant le vérin hydraulique (10) lorsque la liaison est verrouillée.

15. Procédé selon la revendication 14,
**caractérisé en ce**
**qu'**après le déplacement relatif du deuxième composant (20) dans une position de travail, l'ensemble de liaison est à nouveau détaché et la bague pivotante (18) reste au niveau du deuxième composant (20).
